Europäisches Patentamt

European Patent Office

Office européen des brevets

(11) Publication number: 0 054 964
B1

# EUROPEAN PATENT SPECIFICATION

(45) Date of publication of patent specification: 05.06.85

(21) Application number: 81110695.4

(22) Date of filing: 22.12.81

(51) Int. Cl.⁴: F 02 B 31/00, F 02 M 35/10, F 01 L 1/44

(54) Multi-intake valve type internal combustion engine.

(30) Priority: 22.12.80 JP 182223/80
10.07.81 JP 107664/81

(43) Date of publication of application:
30.06.82 Bulletin 82/26

(45) Publication of the grant of the patent:
05.06.85 Bulletin 85/23

(84) Designated Contracting States:
DE FR GB IT

(56) References cited:
DE-A-2 419 295
DE-A-2 854 332
GB-A-2 046 357
US-A-4 271 801

(73) Proprietor: Yamaha Motor Co., Ltd.
2500 Shingai
Iwata-shi Shizuoka-ken (JP)

(72) Inventor: Yoshida, Takumori
2822 Nishikaizuka
Iwata-shi Shizuoka-ken (JP)
Inventor: Yamada, Akira
1310-5 Yokosuka, Ohsuka-cho
Ogasa-gun Shizuoka-ken (JP)
Inventor: Shinmura, Sadayuki
1309 Nishikaizuka
Iwata-shi Shizuoka-ken (JP)

(74) Representative: Patentanwälte Grünecker, Dr. Kinkeldey, Dr. Stockmair, Dr. Schumann, Jakob, Dr. Bezold, Meister, Hilgers, Dr. Meyer-Plath
Maximilianstrasse 58
D-8000 München 22 (DE)

The file contains technical information submitted after the application was filed and not included in this specification

Courier Press, Leamington Spa, England.

## Description

The invention relates to a multi-intake valve engine of the type indicated in the precharacterising clause of claim 1. An engine of this type is known from JP-54055221 (corresponding to not prepublished US—A—4271801).

Said document shows an internal combustion engine with twin intake ports for each cylinder comprising a duplex carburettor, a pair of primary and secondary venturis and intake manifold connected between an engine cylinder and the carburettor, the manifold having a common chamber located downstream of the venturis and the pair of primary and secondary branch intake passages opening to the cylinder through a pair of intake ports, respectively. A control valve is provided in the secondary intake passage for controlling the flow of an air-fuel mixture therethrough, said control valve normally closing the secondary passage and only opening same when the engine rotates at speed under heavy load.

The conventional engine shows an intake manifold having a common chamber located downstream of the carburettor and said pair of primary and secondary branch passages; the secondary passage being normally closed by said control valve which is opened and closed by a control mechanism in accordance with the air-fuel mixture flowing rate through the above mentioned primary and secondary venturis.

The prior art document does not, however, show any communication between said first and secondary air passages downstream of said control valve.

As outlined above, in the prior art the secondary passage is normally blocked and is only opened when the engine rotates at high speed under heavy load. Consequently, under medium load conditions, the air-fuel mixture flows exclusively through the primary branch passage which opens into the cylinder by virtue of an intake valve located in said primary branch passage.

The conventional multi-intake valve engine can increase the effective area of the intake valve and permits an increase of the maximum output power (engine torque). The increase in the torque during the low and intermediate running operations very often, however, cause instability in the fuel combustion due to an excessive reduction in the flow speed of intake air in said low and intermediate running operations due to the fact that the effective area of the branched intake passage is too large.

The object of the present invention is to improve the conventional multi-intake valve type engine, and in particular, the intake system of such an engine such that during low and intermediate load running operations of the engine the intake flow speed can be held at a high level in order to permit a relatively high torque even during slow and intermediate running operations.

According to the present invention, the above inherent technical task is solved by the subject matter of claim 1.

The claimed invention provides a remarkable technical progress, since during slow and intermediate running operations (when the control valve holds closed the secondary branch intake passage) the intake flow speed is held at a high level.

Partly since the first and second air intake passages are connected with the combustion chamber and partly since the second air intake passage is equipped with said control valve, which is adapted to be closed during the low speed or load running operation of the engine, the intake flow rate can be remarkably increased so that the maximum output power can be increased. As a result of the communication port, if the mixture to flow from the first air intake passage into the combustion chamber is subjected to a high resistance by the constricting phenomena when the intake valves are open, it changes its flowing direction from said communication port to the second air intake passage until it flows into the combustion chamber through the intake valves.

According to a preferred embodiment of the invention, said first and second intake air passages are joined at the upstream side to form a manifold in which a manually operated throttle valve is disposed. Further at the downstream side of said throttle valve, there is disposed, in addition to said control valve in said second intake air passage, a manually operated valve in said first intake air passage which opens and closes in response to said throttle valve. Furthermore, an interlock mechanism is interposed between said throttle valve and said manually operated valve so that when the throttle valve is open, said manually operated valve will open fully before the throttle valve becomes wide-open.

According to an improved embodiment of the invention, said communicating port is provided in the cylinder head.

Preferably, said interlock mechanism comprises a connecting rod for actuating said manually operated valve in dependency of the operation of said throttle valve.

According to another preferred embodiment of the present invention, said connecting rod connects a first lever which transmits the movement of said throttle valve to a second lever which is fixed on a shaft of the manually operated valve. Furthermore, according to another preferred embodiment of the invention, a cam means is fixed to the shaft of said throttle valve, said cam means acting upon said first lever.

Preferably, said connecting rod and said levers are dimensioned and arranged such that said manually-operated valve begins to open when said throttle valve is opened wider than in idle operation and reaches its fully open position when said throttle valve has reached about its half opened position.

According to another embodiment of the present invention, said control valve is an automatic valve, which is connected to a diaphragm means by virtue of which said automatic valve is kept closed during low load operation of the engine, while being opened under heavier load, the degree of opening being in accordance with the load applied.

In view of the preferred embodiment of the present invention as defined in claim 2, the inventors have completed their invention on the assumption that when the manually-operated valve is opened, the flow rate of the intake air in the first intake air passage reaches saturation before the manually-operated valve is wide-open, and that when the intake air flows into the combustion chamber through the intake valve port, the intake air passage pressure becomes lower than the pressure of the combustion chamber because of the intake air's high speed with the result that the intake air is compressed from around to flow in a compressed form. The inventive embodiment according to claim 2, therefore has the advantage that the first intake air passage and the second intake air passage are joined and the manually-operated valve and at the downstream side of the manually-operated valve, and part of the intake air in the first intake air passage is by-passed to the second intake air passage so that the velocity and flow rate of the intake air in the first intake air passage are increased without opening the automatic valve, thus improving the acceleration response of the engine within the range of medium load.

One way of carrying out the invention is described in detail below with reference to drawings which illustrate only one specific embodiment, in which:

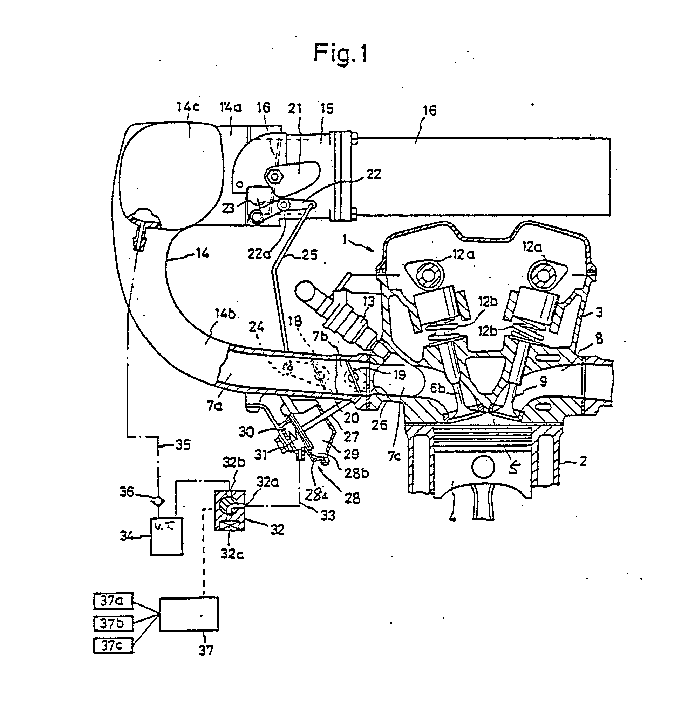

Figure 1 is a cross section of a major portion of the engine,

Figure 2 is a partly broken view of the engine, and

Figure 3 is a graph showing the relationship between engine torque and engine speed for various multi-intake valve type engines.

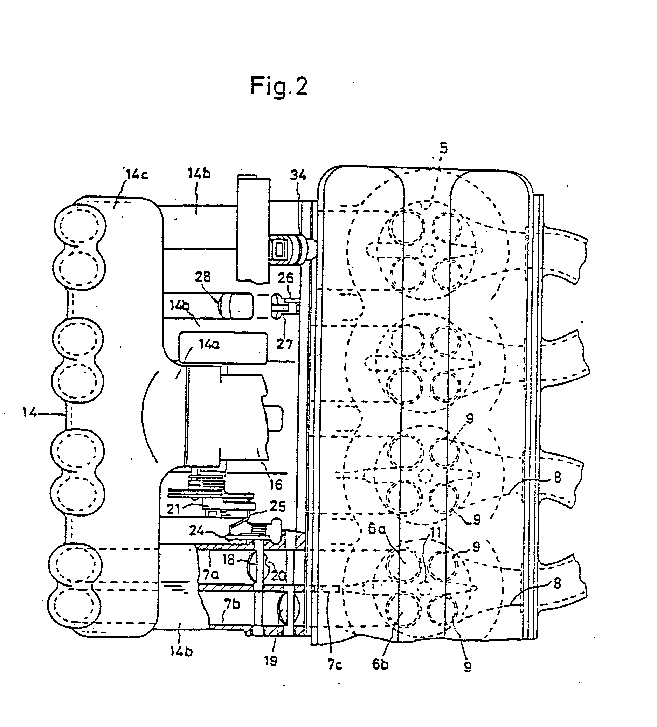

Reference numeral 1 is an engine body, which has combustion chambers 5 each defined by a cylinder 2, a cylinder head 3 and a piston 4. In the cylinder head 3, forming the combustion chamber 5, are installed two intake valves 6a, 6b of the same diameter. The combustion chamber is connected via the intake valve 6a with a first air intake passage 7a for normal operation which is used within the entire range of loads and via an intake valve 6b with a second intake air passage 7b for high-power operation (Figure 2). Numeral 8 is an exhaust passage, which is led from the combustion chamber 5 via two exhaust valves 9, 9. Numeral 11 is a spark plug; and numerals 12a, 12b, 12c denote a known valve mechanism comprising a camshaft 12a and valve springs 12b for opening and closing the intake valves 6a, 6b and the exhaust valves 9, 9.

The first intake air passage 7a and the second intake air passage 7b are connected by a communicating port 7c in the cylinder head 3 and connect the combustion chamber 5 via the cylinder head 3 and intake branch pipe 14 with a manifold 15, 16 having its upstream end being open to the atmosphere. Preferably, said communication port 7c is made to have substantially the same effective area as that of the first intake air passage. Numeral 14a denotes a section of the intake branch pipe which is common for all individual intake pipes. Numeral 14b denotes branched sections and numeral 14c refers to a distribution box. The manifold section 15 is manually operated and provided with a throttle valve 16 for the control of engine output. Near the downstream end of said branched section 14b is installed a manual valve 18 in the first intake air passage 7a which opens and closes in conjunction with said throttle valve 16 and an automatic valve 19 in the second intake air passage 7b which closes when the engine is running with low power. Numeral 20 represents a cutout made in said manually-operated valve 18, for forming a sectional area suitable for supplying the necessary amount of intake air to the engine cylinder during idling operation and within a prescribed range of low-load operation. Numeral 13 is a conventional electronically-controlled fuel injection valve.

On the shaft of the throttle valve 16 is fixed a cam 21, which is engaged with a rocking arm 22 pivoted on the outer surface of the manifold 15. Said rocking arm 22 rotatably supports a roller 22a at its center which roller can rotate on the face of the cam 21. Numeral 23 is a slight clearance produced between the cam 21 and the roller 22a when the throttle valve 16 is opened to idle position. The roller 22a comes in contact with the cam 21 only when the throttle valve 16 is opened over a predetermined opening. This mechanism is a so-called "lost motion mechanism". On the shaft of the manually-operated valve 18 there is fixed a driven arm 24. This driven arm 24 and said rocking arm 22 are connected by a rod 25 and dimensioned such that the manually-operated valve 18 begins to open when the throttle valve 16 has been opened more than the predetermined amount of opening and valve 18 reaches its wide-open position when the throttle valve 16 has been nearly half opened.

The automatic valve 19 carries a fixed arm 26 on its shaft. The arm 26 is connected with a diaphragm means 28 through a rod 27. The diaphragm means 28 comprises an elastic diaphragm 28b which divides the interior of a case 28a into an atmosphere chamber 29 and a vacuum chamber 30. The other end of said rod 27 is connected with the elastic diaphragm 28b, which is biased toward the atmosphere chamber 29 by means of a spring 31.

The atmosphere chamber 29 is constantly open to the atmosphere while the vacuum chamber 30 communicates with a vacuum tank 34 through a passage 33 having a three-way valve 32. The interior of the vacuum tank 34 is connected with the interior of the distribution box 14c by a passage 35, in which is installed a check valve 36 which allows only the flow of air toward the distribution box. The three-way valve 32 is controlled

by an electric controller 37, which switches a valve port 32a from a first port 32b connected with the vacuum tank 34 to a second port 32c open to the atmosphere through an air filter or vice versa. Numerals 37a, 37b and 37c are sensors for detecting the flow rate of intake air, engine speed and vehicle speed respectively.

Subsequently described is the operation of this embodiment. When the throttle valve 16 is operated during idling or nearly low-load operation, there remains a clearance 23 between the cam 21 and the roller 22a on the rocking arm 22, so that even when the opening of the throttle valve 16 is more or less controlled, the manually-operated valve 18 is held closed. Therefore, when the throttle valve is slightly open to allow slight flow of the intake air, the intake air to be supplied to the cylinders is controlled by a common throttle valve, being evenly distributed to respective cylinders. At this time, the electric controller 37 receiving a signal from the sensors 37a, 37b and 37c connects the main port 32a of the three-way valve 32 to the first port 32b communicating with the vacuum tank 32. As a result, the diaphragm means 28 with the elastic diaphragm 28b overcoming the force of the spring 31 pulls the rod 27 to close the automatic valve 19. Therefore, all of the intake air metered by the throttle valve 16 is led to the first intake air passage 7a and introduced into the combustion chamber 5 through the cutout 20 made in the manually-operated valve 18. The intake air, when passing through said cutout 20 becomes a thin rapid stream of air, flowing, together with the fuel being injected from the fuel injection valve 13, into the combustion chamber 5 when the intake valve 6a is opened. A violent swirl of the intake air within the combustion chamber 5 remains till the end of the compression stroke though it is slightly dampened in that stroke, causing a severe turbulent flow in the combustion chamber 5. Therefore, when the mixture is ignited by the spark plug 11, flames spread rapidly and with stability into the combustion chamber 5, thus minimizing misfire and incomplete combustion.

Subsequently, when the throttle valve 16 is opened slightly wider to increase the engine power and the cam 21 turns more than the clearance 23, the manually-operated valve 18 is also opened to increase the volume of intake air in the first intake air passage 7a, thus raising the velocity of flow of the intake air to allow an efficient inflow of intake air into the combustion chamber 5 when the intake valve 6a is opened. In addition, less fuel in the mixture will attach to the wall of the intake air passage, improving the acceleration response of the engine.

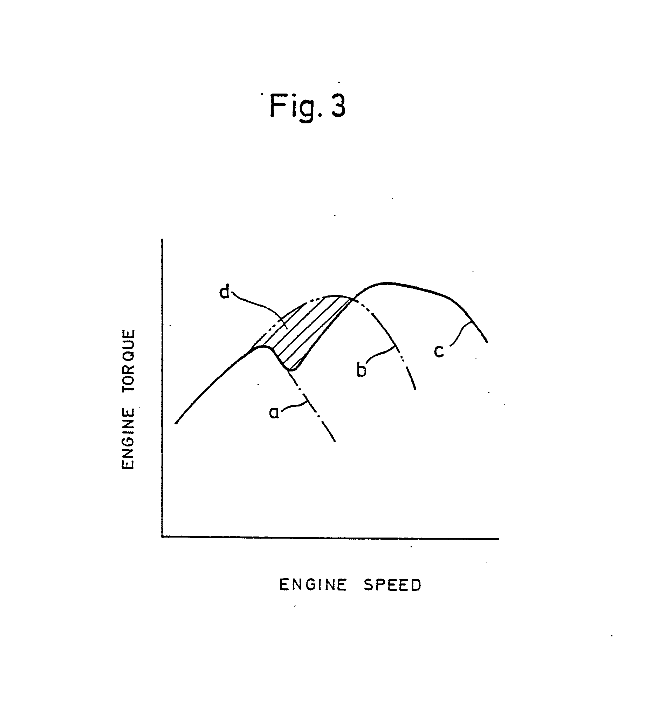

When the throttle valve 16 is opened wider, the manually-operated valve 18 is rapidly opened by the cam 21, being fully opened when the throttle valve 16 has nearly reached its half-open position. By this, the volume of the intake air in the first intake air passage 7a nearly reaches the maximum. At this time, as the intake air passing through the intake valve 6a rapidly flows into the combustion chamber as aforementioned, the pressure becomes lower than the surrounding, and accordingly the intake air is compressed from outside by the gases in the combustion chamber, showing the so-called constricting phenomena of high speed gas flow. However, since part of the intake air is being allowed to flow into the second intake air passage 7b by the said communicating port 7c, thus by-passing valve 18 of the first intake air passage 7a, said contracted-flow phenomena can be avoided without reducing the flow rate of the intake air in the first intake air passage 7a and accordingly a head-tapping phenomenon of the intake air stream in the medium load range inherent to the engine having the first and second intake air passages 7a and 7b can be prevented. In Figure 3, *a* represents an output torque of an engine having no communicating port 7c and *b* represents that of an engine having the communicating port 7c.

If, in this state, the volume of the intake air increases, the electric controller 37 switches the three-way valve 32 to connect the main port 32a to the second port 32c which is open to the atmosphere. Then the atmosphere is introduced into the vacuum chamber 30 and the elastic diaphragm 28b pushes the rod 27 with the force of the spring 31, thus opening the automatic valve 19 to the degree of opening in accordance with load applied. When the manual valve 18 and the automatic valve 19 have been thus opened fully, the intake air flows into the combustion chamber 5 from both the first and second intake air passages 7a and 7b. The volume of the incoming air at this time is so large as to obtain high power, which is inherent to the engine having multiple intake valves (c in Figure 3). Namely, in the conventional multiple intake valve type engine, the engine torque does not necessarily increase with the rise of engine speed as shown at a in Figure 3, resulting in a largely decreased torque (the hatched area d). In the embodiment according to the present invention, this disadvantage has been obviated.

In the engine of the present invention, as described above, a first intake air passage for normal operation and a second intake air passage for high-power operation are connected with a combustion chamber respectively by intake valves. The intake control system of that engine is characterised in that said first and second intake air passages are joined to form a manifold at the upstream side; in that a manually-operated throttle valve is disposed in said manifold; in that, at the downstream side of said manually-operated throttle valve, is disposed a manually-operated valve which opens and closes in response to said throttle valve in said first intake air passage and an automatic valve in said second intake air passage which opens during the high-power operations of the engine; in that, at their downstream sides, said first and second intake passages communicate with each other; and in that an interlock mechanism is interposed between said throttle valve and manual valve so that when the throttle is opened, said manually-operated valve will open fully before the throttle valve becomes wide-open.

Therefore, it is possible to increase the surface area of the intake air passage in a similar manner as in prior art further, since the automatic valve is closed and the intake air flows in a relatively narrow passage to reach the combustion chamber when the engine is running at a low power, a relatively high speed intake air stream can be obtained, thereby improving the acceleration response of the engine. Furthermore, since part of the intake air flows from the second intake air passage into the combustion chamber through the communication port when the intake air flowing in the first intake air passage is limited by the afore-mentioned contracted-flow phenomenon, the automatic valve timing can be set at a relatively retarded point. Accordingly, it is possible to further increase the flow velocity of the intake air in the first intake air passage immediately before the automatic valve begins to open; and even if the flow velocity decreases with the opening of the automatic valve, a still higher velocity of intake air flow can be obtained as compared with conventional ones, thus alleviating the head-patting of torque in the medium speed range and obtaining an excellent acceleration response. Also, since the throttle valve is disposed in the manifold section, the flow rate of the intake air during idling can be metered by the throttle valve by setting the minimum opening of the manually-operated valve over an opening required for idling operation. As compared with the setting of the flow rate of the intake air by the manual valve during idling operation when little intake air is flowing, no difference will take place in the flow rate of the intake air between the cylinders, therefore assuring smooth and steady engine operations.

As explained above, violent turbulent flow of the mixture can be produced in the combustion chamber and also unsteady engine operation can be alleviated during low-load operations including idling when the fuel in the combustion chamber is likely to become unsteady, by providing the manually-operated valve with the cutout and also by inter-connecting the throttle valve and the manually-operated valve through the lost motion mechanism. Furthermore, the distance between both valves is decreased by bending the intake air passage on the side of the engine and disposing the basic end where the manually-operated valve is located, and the manifold section where the throttle valve is located, nearly vertically, thereby permitting easy connection of these sections including the rod.

"Manually-operated valve" as used throughout the foregoing description indicates that the referred to valve is not operated automatically.

## Claims

1. A multi-intake valve type engine of the type comprising both a first intake air passage (7a) to be normally used all over the running range and a second intake air passage (7b) to be used mainly during a high-speed or high-load running operation, which passages are connected through a respective intake valve (6a, 6b) with a combustion chamber (5) defined by a cylinder (2), a cylinder head (3) and a piston (4), said second intake air passage (7b) being equipped with a control valve (19) closing said second intake air passage during low speed or low-load running operation of the engine, characterised in that said first intake air passage (7a) and said second intake air passage (7b) are made to have communication downstream of said control valve (19) closing said second intake passage (7b) and in the vicinity of said intake valve (6a, 6b) through a communication port (7c), said communication port (7c) being made to have substantially the same effective area as that of the first passage (7a).

2. Engine according to claim 1, characterised in that both said first and second intake air passages (7a, 7b) are joined to form a manifold (15, 16) at the upstream side, in that a manually-operated throttle valve (16) is disposed in said manifold; in that, at the downstream side of said manually-operated throttle valve, there is, besides that control valve (19) as provided in said second intake air passage (7b), a manually-operated valve (18) which opens and closes in response to said throttle valve in said first intake air passage, said control valve (19) opening during high power operation of the engine, and in that an interlock mechanism (25—29) is interposed between said throttle valve (16) and said manually-operated valve (18) so that when the throttle valve (16) is opened, said manually-operated valve will open fully before the throttle valve becomes wide-open.

3. Engine according to claim 1 or 2, characterised in that said communicating port (7c) is provided in the cylinder head (3).

4. Engine according to one of claims 1—3, characterised in that said interlock mechanism (25—29) comprises a connecting rod (25) for actuating said manually-operated valve (18) in dependency of the operation of said throttle valve (16).

5. Engine according to one of claims 1—4, characterised in that said connecting rod (25) connects a first lever (22) which transmits the movements of said throttle valve (16) to a second lever (24) which is fixed to a shaft of the manually-operated valve (18).

6. Engine according to claim 5, characterised in that a cam means (21) is fixed to the shaft of said throttle valve (16), which cam means acts upon said first lever (22).

7. Engine according to one of claims 4—6, characterised in that said connecting rod (25) and said levers (22, 24) are dimensioned and arranged such that said manually-operated valve (18) begins to open when said throttle valve (16) is opened wider than in idle operation position and reaches its fully-open position when said throttle valve has reached about its half-open position.

8. Engine according to claim 2, characterised in that said automatic valve (19) is connected to a diaphragm means (28) by virtue of which said automatic valve is kept closed during low-load operation of the engine while being opened under heavier load, the degree of opening being in accordance with the load applied.

9. Engine according to one of claims 2—8, characterised in that said interlock mechanism (25—29) comprises a lost motion mechanism for connecting the throttle valve (16) and the manually-operated valve (18).

**Patentansprüche**

1. Brennkraftmaschine mit mehreren Einlässen, welche einen ersten Lufteinlaßkanal (7a) aufweist, der normalerweise über den ganzen Betriebsbereich Verwendung findet, sowie einen zweiten Lufteinlaßkanal (7b), welcher hauptsächlich bei hoher Drehzahl oder hoher Belastung zur Anwendung kommt, wobei die Kanäle jeweils mittels eines Einlaßventils (6a, 6b) mit einer Verbrennungskammer (5) verbinbar sind, welche durch einen Zylinder (2), einen Zylinderkopf (3) und einen Kolben (4) gebildet wird, wobei der zweite Lufteinlaßkanal (7b) mit einem Steuerventil (19) zum Verschließen desselben bei geringer Drehzahl oder geringer Belastung der Maschine versehen ist, dadurch gekennzeichnet, daß der erste Lufteinlaßkanal (7a) und der zweite Lufteinlaßkanal (7b) so ausgestaltet sind, daß sie stromabwärts des Steuerventils (19) zum Verschließen des zweiten Lufteinlaßkanals (7b) und in der Nähe der Einlaßventile (6a, 6b) über einen Verbindungsdurchlaß (7c) miteinander verbunden sind, wobei der Verbindungsdurchlaß (7c) im wesentlichen dieselbe wirksame Fläche aufweist, wie der erste Einlaßkanal (7a).

2. Brennkraftmaschine nach Anspruch 1, dadurch gekennzeichnet, daß beide, der erste und der zweite Lufteinlaßkanal (7a, 7b) stromaufwärts miteinander verbunden sind, um einen Ansaugkrümmer (15, 16) zu bilden, daß ein manuell betätigbares Drosselventil (16) in diesem Ansaugkrümmer angeordnet ist, daß stromab der manuell betätigbaren Drosselventils, neben dem in dem zweiten Lufteinlaßkanal (7b) angeordneten Steuerventil (19) ein manuell betätigbares Ventil (18) angeordnet ist, welches sich in Abhängigkeit von dem Drosselventil in dem ersten Lufteinlaßkanal öffnet und schließt, wobei sich das Steuerventil (19) während eines Hochleistungsbetriebs der Maschine öffnet, und daß ein Verbindungsmechanismus (25 bis 29) zwischen dem Drosselventil (16) und dem manuell betätigbaren Ventil (18) zwischengeschaltet ist, so daß bei Öffnung des Drosselventils (16) das manuell betätigbare Ventil vollständig geöffnet wird, bevor das Drosselventil ganz geöffnet ist.

3. Brennkraftmaschine nach einem der Ansprüche 1 oder 2, dadurch gekennzeichnet, daß der Verbindungsdurchlaß (7c) in dem Zylinderkopf (3) ausgebildet ist.

4. Brennkraftmaschine nach einem der Ansprüche 1 bis 3, dadurch gekennzeichnet, daß der Verbindungsmechanismus (25 bis 29) eine Verbindungsstange (25) zur Betätigung des manuell betätigbaren Ventils (18) in Abhängigkeit von der Betätigung des Drosselventils (16) umfaßt.

5. Brennkraftmaschine nach einem der Ansprüche 1 bis 4, dadurch gekennzeichnet, daß die Verbindungsstange (25) einen ersten Hebel (22), welcher die Bewegung des Drosselventils (16) überträgt, mit einem zweiten Hebel (24) verbindet, welcher mit einer Welle des manuell betätigbaren Ventils (18) verbunden ist.

6. Brennkraftmaschine nach Anspruch 5, dadurch gekennzeichnet, daß eine Nockeneinrichtung (21) mit der Welle des Drosselventils (16) verbunden ist, wobei die Nockeneinrichtung mit dem ersten Hebel (22) zusammenwirkt.

7. Brennkraftmaschine nach einem der Ansprüche 4 bis 6, dadurch gekennzeichnet, daß die Verbindungsstange (25) und die Hebel (22, 24) derart dimensioniert und angeordnet sind, daß sich das manuell betätigbare Ventil (18) zu öffnen beginnt, wenn das Drosselventil (16) weiter als in der Leerlaufstellung geöffnet ist und seine vollständig geöffnete Position dann erreicht, wenn das Drosselventil ungefähr seine halbgeöffnete Stellung erreicht hat.

8. Brennkraftmaschine nach Anspruch 2, dadurch gekennzeichnet, daß das automatische Steuerventil (19) mit einer Membraneinrichtung (28) in Verbindung steht, durch deren Einwirkung das automatische Steuerventil bei einem Betrieb der Maschine mit geringer Belastung geschlossen gehalten wird, während es bei stärkerer Belastung geöffnet wird, wobei der Öffnungsgrad in Übereinstimmung mit der aufgebrachten Belastung ist.

9. Brennkraftmaschine nach einem der Ansprüche 2 bis 8, dadurch gekennzeichnet, daß der Verbindungsmechanismus (25 bis 29) einen Totgangmechanismus zur Verbindung des Drosselventils (16) mit dem manuell betätigbaren Ventil (18) umfaßt.

**Revendications**

1. Moteur du type comportant plusieurs soupapes d'admission, comprenant à la fois un premier passage d'air d'admission (7a) devant être normalement utilisé dans toute la gamme de fonctionnement et un second passage d'air d'admission (7b) devant être utilisé principalement pendant une condition de fonctionnement à grande vitesse ou charge, lesdits passages étant reliés par l'intermédiaire d'une soupape d'admission respective (6a, 6b) à une chambre de combustion (5) définie par un cylindre (2), une culasse (3) et un piston (4), ledit second passage d'air d'admission (7b) étant équipé d'une soupape de commande (19) fermant ledit second passage d'air d'admission pendant une condition de fonctionnement à faible vitesse ou charge du moteur, caractérisé en ce que ledit premier passage d'air d'admission (7a) et ledit second passage d'air d'admission (7b) sont agencés pour être en communication en aval de ladite soupape de commande (19) fermant ledit second passage d'admission (7b) et au voisinage de ladite soupape d'admission (6a, 6b) par l'intermédiaire d'un orifice de communication (7c), cet orifice de communication (7c) étant agencé de manière à avoir essentiellement la même surface efficace que celle du premier passage (7a).

2. Moteur selon la revendication 1, caractérisé en ce que lesdits premier et second passages d'admission d'air (7a, 7b) sont reliés pour former un collecteur (15, 16) sur le côté amont, en ce qu'une valve à papillon actionnée manuellement (16) est disposée dans ledit collecteur, en ce que, sur le côté aval de ladite valve à papillon actionnée manuellement, il est prévu, en plus de la soupape de commande (19) qui est placée dans le second passage d'admission d'air (7b), une valve actionnée manuellement (18) qui s'ouvre et se ferme en réponse à ladite valve à papillon, placée dans le premier passage d'admission d'air, ladite soupape de commande (19) s'ouvrant pendant une marche à grande puissance du moteur, et en ce qu'un mécanisme de verrouillage (25—29k) est interposé entre ladite valve à papillon (16) et ladite valve actionnée manuellement (18) de manière que, lorsque la valve à papillon (16) est ouverte, la soupape actionnée manuellement s'ouvre complètement avant que la valve à papillon devienne largement ouverte.

3. Moteur selon l'une des revendications 1 ou 2, caractérisé en ce que ledit orifice de communication (7c) est ménagé dans la culasse (3).

4. Moteur selon l'une des revendications 1 à 3, caractérisé en ce que ledit mécanisme de verrouillage (25—29) comprend une tige de liaison (25) pour manoeuvrer ladite valve actionnée manuellement (18) en relation avec l'actionnement de ladite valve à papillon (16).

5. Moteur selon l'une des revendications 1 à 4, caractérisé en ce que ladite tige de liaison (25) est reliée à un premier levier (22) qui transmet les mouvements de la valve à papillon (16) à un second levier (24) qui est fixé sur une tige de la valve actionnée manuellement (18).

6. Moteur selon la revendication 5, caractérisé en ce qu'une came (21) est fixée sur la tige de la valve à papillon (16), ladite came agissant sur le premier levier (22).

7. Moteur selon l'une des revendications 4 à 6, caractérisé en ce que ladite tige de liaison (25) et lesdits leviers (22, 24) sont dimensionnés et agencés de manière que ladite valve actionnée manuellement (18) commence à s'ouvrir quand la valve à papillon (16) est ouverte plus largement que dans sa position de fonctionnement au ralenti et atteigne sa position d'ouverture complète quand ladite valve à papillon a atteint à peu près sa position de demi-ouverture.

8. Moteur selon la revendication 2, caractérisé en ce que ladite valve automatique (19) est reliée à un diaphragme (28) à l'aide duquel ladite valve automatique est maintenue fermée pendant un fonctionnement à faible charge du moteur, tandis qu'elle est ouverte lors d'une charge plus forte, le degré d'ouverture étant en relation avec la charge appliquée.

9. Moteur selon l'une des revendications 2 à 9, caractérisé en ce que ledit mécanisme de verrouillage (25—29) comprend un mécanisme à mouvement à vide pour relier la valve à papillon (16) à la valve actionnée manuellement (18).

# Fig.1

# Fig. 2

Fig. 3